(19) Europäisches Patentamt
European Patent Office
Office européen des brevets

(11) Veröffentlichungsnummer: **0 017 917**
**B1**

# (12) EUROPÄISCHE PATENTSCHRIFT

(45) Veröffentlichungstag der Patentschrift: **11.07.84**

(51) Int. Cl.³: **C 08 G 18/67**, C 08 F 283/00, C 08 G 18/71

(21) Anmeldenummer: **80101926.6**

(22) Anmeldetag: **10.04.80**

## (54) Härtbare Massen und ihre Herstellung.

(30) Priorität: **12.04.79 DE 2914982**

(43) Veröffentlichungstag der Anmeldung: **29.10.80 Patentblatt 80/22**

(45) Bekanntmachung des Hinweises auf die Patenterteilung: **11.07.84 Patentblatt 84/28**

(84) Benannte Vertragsstaaten: **AT BE CH DE FR GB IT LI NL SE**

(56) Entgegenhaltungen:
**EP - A - 0 000 407**
**DE - A - 2 164 386**
**DE - A - 2 530 896**
**US - A - 4 129 667**
**US - E - 29 131**

**Die Akte enthält technische Angaben, die nach dem Eingang der Anmeldung eingereicht wurden und die nicht in dieser Patentschrift enthalten sind.**

(73) Patentinhaber: **Consortium für elektrochemische Industrie GmbH, Zielstattstrasse 20, D-8000 München 70 (DE)**

(72) Erfinder: **Marquardt, Klaus, Dr. Dipl.-Chem., Unghauserstrasse 39, D-8263-Burghausen (DE)**

EP 0 017 917 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft härtbare Massen auf Grundlage von Estern bzw. Polyestern mit äthylenisch ungesättigten Anfangsgruppen, wiederkehrenden Lactoeinheiten und Hydroxy-Endgruppen und von Alkyl- und/der Arylisocyanaten.

Es ist bekannt, härtbare Massen durch Umsetzung von Polyestern mit Hydroxy-Endgruppen, Diisocyanaten und Hydroxygruppen enthaltenden äthylenisch ungesättigten Verbindungen herzustellen. Die daraus resultierenden Produkte enthalten allerdings grosse Mengen unerwünschter und störender Nebenprodukte. So tritt z. B. häufig unerwünschte Molekulargewichtserhöhung der Polyester durch Di- oder Oligomerisierung über Urethanbindungen auf oder es verbleibt nicht reagiertes Isocyanat im Produkt (vgl. DE-A-2734237, US-A-3749592). Insbesondere das gesundheitsschädliche Isocyanat muss erst umständlich entfernt werden.

In der US-E-29131 wird vorgeschlagen, Polycapronsäurepolyole, hergestellt aus Glykolen und Caprolacton, mit (Meth-) Acrylsäure zu verestern und gegebenenfalls anschliessend mit Isocyanaten umzusetzen. Bei derartiger Vorgangsweise tritt jedoch eine Reihe von Nebenprodukten auf, die die Qualität dieser Massen und der daraus hergestellten Produkte beeinträchtigen können.

Aufgabe der Erfindung war daher, verbesserte härtbare Massen bereitzustellen, die in einem einfachen Verfahren hergestellt werden können.

Diese Aufgabe kann überraschenderweise gelöst werden durch Umsetzung von (Poly) Estern aus wiederkehrenden Lactoeinheiten, die eine äthylenisch ungesättigte Anfangsgruppe und eine Hydroxy-Endgruppe besitzen, mit Alkyl- und/oder Arylisocyanaten.

Gegenstand der Erfindung sind härtbare Massen aus bei Raumtemperatur flüssigen oder festen, unterhalb 60° C schmelzbaren Urethanen, die hergestellt worden sind durch Umsetzung von Hydroxy-Endgruppen enthaltenden Estern bzw. Polyestern mit di- und/oder polyfunktionellen und ggf. anschliessend mit monofunktionellen Isocyanatoalkyl- und/oder -arylverbindungen, dadurch gekennzeichnet, dass die umgesetzten Ester bzw. Polyester solche der allgemeinen Formel I sind

$$A-(\underset{\underset{O}{\|}}{C}-R-O-)_nH \qquad I,$$

worin bedeuten:

R geradkettige Kohlenwasserstoffreste mit 2 bis 10 Kohlenstoffatomen, die ggf. durch bis zu 5 Methyl-, Äthyl- und/oder Propylgruppen substituiert sein können, wobei innerhalb eines (Poly) Estermoleküls der Formel I alle Reste R gleich sein oder aber die Reste R verschieden sein können,

A einen äthylenisch ungesättigten Rest der allgemeinen Formeln II–V:

$$(CH_2{=}\underset{\underset{R^1}{|}}{C}-\underset{\underset{O}{\|}}{C}-Y-)_pR^2-X- \qquad II,$$

$$CH_2-\underset{\underset{R^1}{|}}{C}-O- \qquad III,$$

$$CH_2{=}\underset{\underset{R^1}{|}}{C}-CH_2-X- \qquad IV,$$

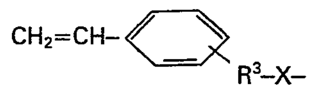

V

mit

$R^1$ = H oder $CH_3$,

$R^2$ einen (p+1)-funktionellen geradkettigen oder verzweigten Alkyl- oder einen (p+1)-funktionellen Cycloalkylrest mit jeweils 1 bis 20 C-Atomen,

$R^3$ einen Rest der Bedeutung $R^2$ mit p=1,

X O oder $NR^4$,

Y O, NH oder $NR^4$,

$R^4$ $CH_3$ oder $C_2H_5$,

n ganze Zahlen von 1 bis 100 und

p ganze Zahlen von 1 bis 3.

Die erfindungsgemässen härtbaren Massen werden dadurch hergestellt, dass Ester bzw. Polyester der allgemeinen Formel I oder Gemische derartiger Ester bzw. Polyester mit Alkyl- und/oder Arylverbindungen, die zwei oder mehrere Isocyanatogruppen besitzen, im Verhältnis der Anzahl der Isocyanatogruppen zu der der Hydroxy-Gruppen der Polyester von 0,2:1 bis 1:1 umgesetzt werden.

Die Ester und/oder Polyester der Formel I können beispielsweise analog der DE-A-1958211 hergestellt werden durch Umsetzung von äthylenisch ungesättigten, aktive Wasserstoffatome enthaltenden Verbindungen mit Lactonen.

Sie sind im allgemeinen, abhängig insbesondere vom Polymerisationsgrad, bei Raumtemperatur flüssig oder fest, wobei die Festpunkte unter 60° C liegen. Insbesondere liegen die Festpunkte der Ester bzw. Polyester zwischen −50° C und 60° C. Da die erfindungsgemäss zu verwendenden Ester bzw. Polyester von ihrer Herstellung her vielfach als Gemische von Estern bzw. Polyestern der Formel I mit verschiedenen Polymerisationsgraden vorliegen, sind sie vielfach wegen der bei Gemischen oft zu beobachtenden Schmelzpunkterniedrigungen flüssig. In diesen Gemischen können auch Ester bzw. Polyester enthalten sein, deren Polymerisationsgrad grösser oder kleiner als die angegebenen Bereiche sind, jedoch liegt der mittlere Polymerisationsgrad solcher Gemische dann vorzugsweise in den für n angegebenen Bereichen.

Vorzugsweise besitzt der Rest R in Formel I die Bedeutung geradkettiger Kohlenwasserstoffreste mit 2–6 Kohlenstoffatomen, die ggf. als durch bis zu 3 Methyl-, Äthyl- und/oder Propyl-, ggf. besonders vorzugsweise durch bis zu 3 Methylgruppen substituiert sein können. Beispiele für geeignete Lactone, aus denen sich die Polyester der Formel I ableiten können, sind Propiolacton, Pivalolacton,

delta-Valerolacton, Methyl-delta-Valerolacton, epsilon-Caprolacton, Methyl-, Dimethyl- oder Trimethyl-epsilon-Caprolactone, zeta-Önantholacton und kappa-Undecalacton. Bevorzugt sind die genannten delta-Valerolactone und die genannten epsilon-Caprolactone.

Die Ester bzw. Polyester werden im allgemeinen erfindungsgemäss als Gemische eingesetzt, sie können aber auch in die einzelnen Verbindungen getrennt und dann als reine Verbindung eingesetzt werden.

Vorzugsweise werden solche Polyester der Formel I verwendet, deren Molekulargewicht nicht höher als 10000 ist, besonders vorzugsweise liegt ihr Molekulargewicht zwischen 500 und 4000.

Unter den Alkyl- und Arylisocyanaten werden Verbindungen verstanden mit jeweils einer oder mehreren Isocyanatogruppen. In einer bevorzugten Ausführungsform werden Alkyl- und/oder Arylmonoisocyanate eingesetzt, nachdem die Polyester erfindungsgemäss mit Alkyl- und/oder Arylverbindungen umgesetzt worden sind, die mehrere Isocyanatogruppen besitzen, um ggf. noch vorhandene freie, nicht mit den mehrere Isocyanatogruppen enthaltenden Alkyl- und/oder Arylverbindungen abreagierten Hydroxy-Gruppen der Ester bzw. Polyester ebenfalls zu Urethangruppen umzusetzen. Die erfindungsgemässen Massen können aber auch Ester bzw. Polyester der Formel I enthalten, die nicht mit Isocyanatoverbindungen umgesetzt sind.

Für das erfindungsgemässe Verfahren sind insbesondere solche Alkyl- und/oder Arylverbindungen geeignet, die bereits als di- und/oder polyfunktionelle Alkyl- und/oder Arylisocyanate für die Herstellung von Urethanverbindungen, insbesondere von Polyurethanverbindungen, verwendet wurden.

Beispiele für di- und polyfunktionelle Isocyanatoarylverbindungen sind Diisocyanatobenzole, Diisocyanatotoluole, 4,4'-Diisocyanato-diphenylmethan, 1,5-Diisocyanato-naphthalin, Bis-(isocyanato-methyl)benzole, 4,4',4''-Triisocyanatotriphenylmethane, 4,4'-Diisocyanatodiphenyle, N,N'-(4,4'-Dimethyl-3,3'-diisocyanatodiphenyl)uretdion, Triisocyanatodiphenyläther und Umsetzungsprodukte aus Trimethylolpropan und Diisocyanatotoluol (Desmodur® L, Bayer AG). Sollen die härtbaren Massen zu farblosen Polymerisaten gehärtet werden können, ist es oft vorteilhaft, von solchen Urethanen auszugehen, die nicht mit Aryl- sondern mit Alkylisocyanatoverbindungen hergestellt worden sind.

Beispiele für geeignete di- oder polyfunktionelle Isocyanatoalkylverbindungen sind 1,6-Diisocyanatohexan, trimerisiertes Hexamethylendiisocyanat (Desmodur® N, Bayer AG), Isophorondiisocyanat (3-Isocyanatomethyl-3,5,5-trimethylcyclohexylisocyanat), Trimethylhexamethylendiisocyanat, Octadecylendiisocyanat, 1,4-Diisocyanatocyclohexan, 4,4'-Diisocyanatodicyclohexylmethan und Umsetzungsprodukte von Trimethylolpropan und Isophorondiisocyanat im Mol-Verhältnis von 1:3.

Beispiele für geeignete monofunktionelle Isocyanate sind Phenylisocyanat, Tolylisocyanat, Methylisocyanat, Butylisocyanat und Cyclohexylisocyanat. Die Festpunkte der Urethane liegen meist im Bereich von −50° C bis +60° C.

Die erfindungsgemässe Herstellung der härtbaren Massen sollte unter weitgehendem Ausschluss von Wasser durchgeführt werden.

Die erfindungsgemässen härtbaren Massen können ausgehend von einem flüssigen Gemisch der Reaktionspartner, in Schmelze, aber auch in Lösung organischer Flüssigkeiten hergestellt werden, vorausgesetzt, diese organischen Flüssigkeiten sind gegenüber den Isocyanaten inert. Da es oft vorteilhaft ist, die erfindungsgemäss hergestellten Urethane, die in den erfindungsgemässen härtbaren Massen verwendet werden, mit anderen Monomeren bei der Härtung zu copolymerisieren, kann es bevorzugt sein, diese Monomeren bereits als Lösungsmittel bei der erfindungsgemässen Herstellung der härtbaren Massen einzusetzen. Selbstverständlich ist es auch möglich, die erfindungsgemässen härtbaren Massen erst nach ihrer Herstellung in solchen Monomeren zu lösen. Dies ist insbesondere dann zweckmässig, wenn die Monomeren selbst mit den Isocyanaten reagieren könnten.

Als Lösungsmittel für das erfindungsgemässe Verfahren zur Umsetzung der Ester bzw. Polyester der Formel I mit den Isocyanaten, die bei der Härtung der erfindungsgemässen Massen copolymerisiert werden können, eignen sich beispielsweise Ester der Acrylsäure und Methacrylsäure, wie z. B. Methyl-, Äthyl-, Butyl-, tert.-Butyl-, Äthylhexyl-, Äthoxyäthyl-, Tetrahydrofuryl-, 5,6-Dihydrodicyclopentadienyl- und Cyclohexylacrylat, bzw. -methacrylat, Styrol, substituierte Styrole, wie Vinyltoluole, Vinylester von Carbonsäuren, wie Vinylacetat und Vinylbutyrat, N-Vinylpyrrolidon, Acrylnitril, Methacrylnitril, Ester der Acryl- und der Methacrylsäure mit Polyhydroxyverbindungen wie Äthylenglykol-, Butandiol-, Hexandiol-, Diäthylenglykol-, Triäthylenglykol- und Polyäthylenglykoldiacrylat und -dimethacrylat, Glycerin- und Trimethylolpropantriacrylat und -trimethacrylat, Pentaerythrittetraacrylat und -tetramethacrylat, Vinylketone und -äther sowie Vinylhalogenide.

Monomere, die den erfindungsgemässen härtbaren Massen nach der erfindungsgemässen Herstellung zugesetzt werden können, sind beispielsweise hydroxygruppenhaltige Ester, wie Hydroxyäthyl- und Hydroxypropylacrylat und -methacrylat, Pentaerythrittriacrylat und -trimethacrylat, ungesättigte Carbonsäuren wie Acrylsäure, Methacrylsäure, Crotonsäure, Maleinsäure, Fumarsäure und Itakonsäure sowie deren Derivate, wie Amide und Salze, ggf. Halbamide, Halbester und Anhydride.

Die Monomeren werden vorzugsweise in Mengen von 0–60 Gew.-%, besonders vorzugsweise jedoch in Mengen von 20–60 Gew.-%, bezogen auf das Gesamtgewicht aller copolymerisierten Verbindungen, zugegeben.

Das erfindungsgemässe Verfahren zur Herstellung der erfindungsgemässen härtbaren Massen

kann unter Kühlung, bei Raumtemperatur oder bei erhöhter Temperatur, vorzugsweise bei Temperaturen von 0–100° C, besonders vorzugsweise bei 10–60° C, und vorzugsweise bei Normaldruck durchgeführt werden. Es ist selbstverständlich auch möglich, erhöhten oder verminderten Druck anzuwenden.

Oft ist es vorteilhaft bei Umsetzungen der Ester bzw. Polyester der Formel I, insbesondere mit weniger reaktiven Isocyanaten, statt durch Erhöhung der Temperatur die Reaktion durch Zugabe von aus der Herstellung herkömmlicher Urethanverbindungen bekannten Katalysatoren zu beschleunigen. Diese Katalysatoren werden vorzugsweise in Mengen von

0,001–2 besonders vorzugsweise in Mengen von

0,01 –0,1 Gew.-%, bezogen auf das Gesamtgewicht von Ester bzw. Polyester und Isocyanat,

zugesetzt.

Diese Verfahrensweise ist häufig auch geboten, wenn die äthylienische Bindung der Gruppe A der Ester bzw. Polyester sehr reaktiv ist, d. h. sehr leicht polymerisiert.

Ausserdem kann es bevorzugt sein, bei dem erfindungsgemässen Verfahren geringe Mengen von Polymerisationsinhibitoren zuzusetzen, um eine Polymerisation der äthylenischen Doppelbindungen der Ester bzw. Polyesteranfangsgruppen und ggf. der anderen Monomeren zu verhindern. Besonders vorzugsweise werden diese Inhibitoren in Mengen von 10–1000, insbesondere in Mengen von 100–250 ppm, bezogen auf das Gewicht der Gesamtreaktionsmischung, zugesetzt.

Katalysatoren für das erfindungsgemässe Verfahren sind unter vielen anderen , z. B. metallorganische Verbindung, wie Dibutylzinndilaurat oder -acetat, Zinnoktoat, Eisenacetylacetonat, Molybdänglykolat, Tetraphenylzinn, Tetraoctylzinn, Diphenylzinndilaurat, Diphenylzinndiacetat, Tri-n-butylzinnhydroxid, Tri-n-butylzinnacetat, Dimethylzinnoxid, Dibutylzinnoxid, Dilaurylzinnoxid, Di-n-butylzinndichlorid, Dioctylzinndichlorid, Bleiacetat, Manganacetat, Blei-2-äthylhexoat, Bleisalizylat und Bleibenzoat. Metallorganische Verbindungen sind als Katalysatoren bevorzugt, da sie im allgemeinen vor der Härtung der erfindungsgemässen härtbaren Massen nicht entfernt zu werden brauchen.

Weitere für das erfindungsgemässe Verfahren zur Herstellung der härtbaren Massen geeignete Katalysatoren sind z. B. tertiäre Amine, wie Triäthylamin, Triäthylendiamin, Benzyldimethylamin, Methylmorpholin, Dimethylaminozyklohexan.

Da sie besonders gut härtbare Massen ergeben, werden erfindungsgemässe Umsetzungsprodukte solcher Ester bzw. Polyester der Formel I bevorzugt, in denen die Gruppe A die Bedeutung der Formel II oder IV hat. Es ist auch möglich, Umsetzungsprodukte von Estern bzw. Polyestern mit verschiedenen Gruppen A im Gemisch zu verwenden.

Die Eigenschaften der aus den erfindungsgemässen härtbaren Massen hergestellten Polymerisate können von elastomer bis zähhart variiert werden. Die erfindugsgemässen härtbaren Massen können verwendet werden zur Herstellung von Formkörpern, Überzügen, Lacken, Beschichtungen, Druckfarben und als Reaktivkleber.

Die Eigenschaften der härtbaren Massen und der daraus hergestellten Produkte können beeinflusst werden durch den Polymerisationsgrad der im erfindungsgemässen Verfahren eingesetzten Ester bzw. Polyester der Formel I, durch die Auswahl der im erfindugsgemässen Verfahren verwendeten Isocyanatoverbindungen, durch Art und Menge der den erfindungsgemässen härtbaren Massen zugesetzten anderen Monomeren und andere Zusätze, die bisher schon üblichen härtbaren Massen allgemein zugesetzt wurden.

Die erfindugsgemässen Massen lassen sich vorzugsweise radikalisch härten, insbesondere durch Zufügen von in Radikalen zerfallenden Initiatoren, durch Erhitzen oder durch Bestrahlen mit energiereichen Strahlen, wie UV- oder Elektronenstrahlung. Weiterhin können zugesetzt werden Reaktionsbeschleuniger, wie Katalysatoren oder Sensibilisatoren, aber auch Reaktionsmoderatoren.

Als in Radikale zerfallende Initiatoren können alle üblicherweise zur Vernetzung oder Härtung von Kunststoffen verwendeten öllöslichen Radikalbildner in Mengen von 0,001 bis 10 Gew.-%, bezogen auf das Gewicht der polymerisierbaren Anteile der erfindungsgemässen Massen, verwendet werden. Geeignet sind z. B. organische Peroxide und Hydroperoxide sowie Azoverbindungen.

Zur Härtung mit energiereicher Strahlung kann es vorteilhaft sein, wenn in die erfindungsgemässen Massen sogenannte Sensibilisatoren in Mengen von 0,1 bis 10 Gew.-%, bezogen auf das Gesamtgewicht der polymerisierbaren Anteile der erfindungsgemässen Massen, eingebracht worden sind. Die Sensibilisatoren begünstigen die Radikalbildung in den erfindungsgemässen Massen bei der Bestrahlung, wodurch die Polymerisationsgeschwindigkeit heraufgesetzt werden kann. Als Beispiele hierfür seien aromatische Ketone, wie z. B. Benzoin und Benzophenon genannt.

Als weitere Zusätze können beispielsweise Füllstoffe in die erfindungsgemässen härtbaren Massen eingebracht werden, z. B. aktive Füllstoffe, vorzugsweise in Mengen von 0–10 Gew.-% und/oder inaktive Füllstoffe, vorzugsweise in Mengen von 0–50 Gew.-%, weiterhin zusätzlich zu den Füllstoffen auch Farbstoffe, Farbpigmente, UV-Absorber, Flammschutz- und Alterungsschutzmittel, vorzugsweise in Mengen von insgesamt 0–10 Gew.-%, polymere Verbindungen, Weichmacher, vorzugsweise in Mengen von 0–20 Gew.-%, und Mittel zur Modifizierung des Fliessverhaltens. Die Gew.-%-Mengen sind jeweils bezogen auf das Gewicht der äthylenisch ungesättigten Verbindungen in den erfindungsgemässen härtbaren Massen.

Beispiele für polymere Verbindungen sind: Polyäthylen, Polymethylmethacrylat, Polyäthylacrylat, Polystyrol, Polyvinylchlorid, Polyvinylacetat, Polybutadien, Polyvinylpyrrolidon, deren Copolymere und Polycaprolacton.

Beispiele für aktive Füllstoffe sind pyrogen erzeugte, sowie gefällte und unter Erhaltung ihrer Struktur entwässerte Kieselsäuren und Russe. Beispiele für inaktive Füllstoffe sind: Quarzmehl, Calciumcarbonat, Mikroglaskugeln, Calciumsilicat, Benthonite, Titandioxid und Glimmer.

Beispiele für Weichmacher sind: Ester der Phthalsäure, Adipinsäure oder Sebacinsäure mit längerkettigen aliphatischen Alkoholen, chlorierte Paraffine, Polyesterweichmacher und Phosphatweichmacher, wie Trioctyl- oder Tricresylphosphat.

Beispiele für Pigmente sind Zinksulfid, Heliogenblau, Heliogengrün und Paliogenrot.

Als Beispiel für Modifizerungsmittel für die rheologischen Eigenschaften der härtbaren Massen beeinflussen, seien Rizinussäurederivate, wie z. B. Thixatrol® ST (NL-Industries, Hightown, New Jersey, USA) genannt.

Zur Verbesserung der Lagerfähigkeit der erfindungsgemässen härtbaren Massen kann es vorteilhaft sein, Stabilisatoren oder Inhibitoren vorzugsweise in Mengen von 10–1000, besonders vorzugsweise von 100–250 ppm, bezogen auf das Gesamtgewicht der polymerisierbaren Anteile der erfindungsgemässen Massen, bereits bei der Herstellung oder nachträglich zuzusetzen. Geeignete Verbindungen hierfür sind beispielsweise mehrwertige Phenole oder Chinone, wie etwa Hydrochinon, Di-tert.-butylhydrochinon oder Anthrahydrochinon.

Andrerseits kann es auch zweckmässig sein, den härtbaren Massen, insbesondere, wenn sie als Reaktivklebestoffe verwendet werden, Verbindungen zuzusetzen, die bei der Härtung beschleunigend wirken. Diese Beschleuniger werden dann vorzugsweise nur in geringen Mengen von etwa 0,1 bis 5 Gew.-%, bezogen auf das Gesamtgewicht der polymerisierbaren Anteile, zugesetzt. Geeignete Beschleuniger sind dem Fachmann allgemein bekannt. Beispiele sind tert.-Amine mit Alkyl- und/oder Arylsubstituenten, wie Triäthylendiamin und Dimethylanilin, Mercaptane, wie Octylmercaptan oder Dodecylmercaptan und Hydrazide, wie Toluolsulfonsäurehydrazid.

Sollen die erfindungsgemässen härtbaren Massen in Gegenwart von Sauerstoff insbesondere an der Luft gehärtet werden, so ist es oft vorteilhaft, den härtbaren Massen geringe Mengen Paraffin mit einem Schmelzpunkt von etwa 50° C, gelöst in einem Lösungsmittel, vorzugsweise in einer olefinisch ungesättigten Verbindung, zuzusetzen. Die Verwendung der erfindungsgemässen härtbaren Massen bei der Herstellung von Polymerisaten ist eingehend in der Ep-A-17916 beschrieben. In den folgenden Beispielen beziehen sich die Prozentangaben jeweils auf das Gesamtgewicht der Reaktionsmischungen.

Beispiel 1

Ein ungesättigter Polyester aus einem Mol Hydroxyäthylmethacrylat und 3 Mol epsilon-Caprolacton wurde mit 0,5 Mol Diisocyanatotoluol bei Raumtemperatur 3 Std. unter Rühren umgesetzt und zur Vervollständigung der Reaktion weitere 2 Std. auf 50° C erhitzt. Es entstand ein klares, flüssiges Pordukt mit einer Viskosität von 2.450 mPa s bei 25° C und mit einem Schmelzpunkt von −25° C.

Beispiel 2

Ein ungesättigter Polyester aus 1 Mol Hydroxyäthylmethacrylat und 20 Mol epsilon-Caprolacton wurde bei 60° C unter Zugabe von 100 ppm, bezogen auf das Gewicht des Polyesters, Di-tert.-butylbezochinon und 0,1 Gew.-% Dibutylzinndilaurat in 5 Std. mit 0,5 Mol Isophorondiisocyanat umgesetzt. Das Produkt besass einen Schmelzpunkt von 54° C und eine Viskosität, gemessen 70° C, von 4.000 mPa s.

Beispiel 3

Ein ungesättigter Polyester aus 1 Mol Hydroxyäthylacrylat und 6 Mol epsilon-Caprolacton wurde analog Beispiel 2 mit 0,33 Mol trimerisiertem Hexamethylendiisocyanat (Desmodur® N, Bayer AG) umgesetzt. Der Schmelzpunkt des Produkts lag bei 39° C, seine Viskosität, gemessen bei 50° C, bei 1.950 mPa s.

Beispiel 4

Ein ungesättigter Ester aus 1 Mol Hydroxyäthylmethacrylat und 1 Mol epsilon-Caprolacton wurde bei Raumtemperatur 4 Std. mit 0,5 Mol Diisocyanatotoluol gerührt und zur Vervollständigung der Reaktion weitere zwei Std. auf 60° C erhitzt. Das flüssige Produkt wies bei 25° C eine Viskosität von 1600 mPa s auf und erstarrte bei −42° C.

Beispiel 5

Beispiel 2 wurde wiederholt mit der Abänderung, dass statt des dort genannten ungesättigten Polyesters ein ungesättigter Polyester aus 1 Mol Allylalkohol und 2 Mol epsilon-Caprolacton verwendet wurde. Es entstand ein Produkt mit einer Viskosität von 1.600 mPa s bei 25° C und einem Erstarrungspunkt von −47° C.

Beispiel 6

Beispiel 1 wurde wiederholt mit der Abänderung, dass der eingesetzte ungesättigte Polyester mit Hydroxyäthylacrylat statt mit Hydroxyäthylmethacrylat hergestellt worden war. Das Produkt wies eine Viskosität von 5.000 mPa s bei 25° C und einen Erstarrungspunkt von −42° C auf.

Beispiel 7

Beispiel 1 wurde wiederholt mit der Abänderung, dass der ungesättigte Polyester aus 1 Mol Hydroxyäthylmethacrylat und 5 Mol delta-Valerolacton hergestellt worden war. Das Produkt wies bei 25° C eine Viskosität von 6.400 mPa s auf.

Beispiel 8

Beispiel 2 wurde wiederholt mit den Abänderungen, dass als ungesättigter Polyester ein solcher aus 1 Mol Hydroxyäthylmethacrylat und 10 Mol beta-Propiolacton mit Diisocyanatotoluol statt des Isophorondiisocyanats umgesetzt wurde. Es entstand ein bei Raumtemperatur festes Produkt mit einem Schmelzpunkt von 47° C.

Beispiel 9

Das in Beispiel 1 hergestellte Urethan wurde mit 0,5 Gew.-% tert.-Butylperpivalat gemischt und in einer Form bei 60 bis 80° C in 6 Std. zu einer 3 mm dicken Prüfplatte gehärtet. Das glasklare Produkt zeigt eine Zugfestigkeit von 5,9 $N/mm^2$, eine Weiterreissfestigkeit von 14,8 $N/mm^2$ und eine Shorehärte A von 91.

Beispiel 10

Das in Beispiel 3 hergestellte Urethan wurde analog Beispiel 9 gehärtet. Die Zugfestigkeit der Prüfplatte betrug 2,0 $N/mm^2$, die Shorehärte A 79.

Beispiel 11

Analog Beispiel 1 wurde ein ungesättigter Polyester aus 1 Mol 4-Hydroxybutylacrylat und 3 Mol epsilon-Caprolacton mit 0,5 Mol Diisocyanatotoluol umgesetzt. 70 Gew.-Tl. des so hergestellten Urethan (Viskosität bei 25° C 1.130 mPa s) wurden in 30 Gew.-Tl. Methylmethacrylat gelöst. Die Lösung zeigte bei 25° C eine Viskosität von 33 mPa s. Nach Zusatz von 0,5 Gew.-% tert.-Butylperoctoat konnte das Gemisch bei 60° C in einer Form zu einem gelblichen Formkörper gehärtet werden. Er besass die Zugfestigkeit von 8,4 $N/mm^2$, eine Bruchdehnung (nach DIN 53504) von 120%, eine Shorehärte A von 76 und eine Weiterreissfestigkeit (ASTM D 624 B) von 32 $N/mm^2$.

Beispiel 12

70 Gew.-Tl. eines ungesättigten Polyesters aus 1 Mol Hydroxyäthylmethacrylat und 3 Mol epsilon-Caprolacton wurde in 30 Gew.-Tl. Methylmethacrylat gelöst und unter Kühlung mit 0,5 Mol Diisocyanatotoluol in der Weise umgesetzt, dass die Temperatur nicht über 35° C stieg. Nach Zusatz von 0,5 Gew.-% tert.-Butylperoctoat wurde bei 60° C in einer Form gehärtet. Das glasklare, leicht gelbe Produkt besass eine Zugfestigkeit (nach DIN 53504) von 30,0 $N/mm^2$, eine Bruchdehnung von 100%, eine Shorehärte von D 72, eine Weiterreissfestigkeit von 160 $N/mm^2$ und Glasübergangstemperatur von +31° C.

**Patentansprüche**
**für die Vertraggsstaaten: BE, CH, DE, FR, GB, IT, Li, NL, SE**

1. Härtbare Massen aus bei Raumtemperatur flüssigen oder festen, unterhalb 60° C schmelzbaren Urethanen, die hergstellt worden sind durch Umsetzung von Hydroxy-Endgruppen enthaltenden Estern bzw. Polyestern mit di- und/oder polyfunktionellen und ggf. anschliessend mit monofunktionellen Isocyanatoalkyl- und/oder -arylverbindungen, dadurch gekennzeichnet, dass die umgesetzten Ester bzw. Polyester solche der allgemeinen Formel I sind

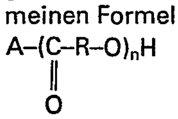
I,

worin bedeuten:

R geradkettige Kohlenwasserstoffreste mit 2 bis 10 Kohlenstoffatomen, die ggf. durch bis zu 5 Methyl-, Äthyl- und/oder Propylgruppen substituiert sein können, wobei innerhalb eines (Poly) Estermoleküls der Formel I alle Reste R gleich sein oder aber die Reste R verschieden sein können,

A ein äthylenisch ungesättigter Rest der allgemeinen Formeln II–V:

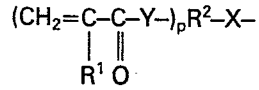
II,

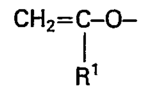
III,

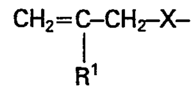
IV,

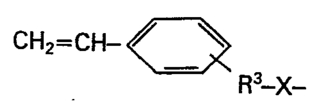
V

mit

$R^1$ H oder $CH_3$,

$R^2$ einen (p+1)-funktionellen geradkettigen oder verzweigten Alkyl- oder einen (p+1)-funktionellen Cycloalkylrest mit jeweils 1 bis 20 Kohlenstoffatomen,

$R^3$ einen Rest der Bedeutung $R^2$ mit p=1,

X O oder $NR^4$,

Y O, NH oder $NR^4$,

$R^4$ $CH_3$ oder $C_2H_5$,

n ganze Zahlen von 1 bis 100 und

p ganze Zahlen von 1 bis 3.

2. Massen nach Anspruch 1, dadurch gekennzeichnet, dass die äthylenisch ungesättigten Endgruppen A solche der Formel II sind.

3. Massen nach Anspruch 1, dadurch gekennzeichnet, dass die äthylenisch ungesättigten Endgruppen A solche der Formel IV sind.

4. Massen nach einem der Ansprüche 1 bis 3, dadurch gekennzeichnet, dass sie zusätzlich äthylenisch ungesättigte Verbindungen enthalten.

5. Verfahren zur Herstellung der Massen nach einem der Ansprüche 1–3, dadurch gekennzeichnet, dass die Ester bzw. Polyester der Formel I mit Di- und/oder Polyisocyanatoalkyl- und/oder -arylverbindungen in solchen Mengenverhältnissen umgesetzt werden, dass das Zahlenverhältnis der Isocyanatgruppen zu den Hydroxylgruppen zwischen 0,2:1 und 1:1 liegt.

6. Verfahren nach Anspruch 5, dadurch gekennzeichnet, dass die nicht mit den Di- und/oder Polyisocyanatoalkyl- und/oder -arylverbindungen abreagierten Hydroxyendgruppen der Ester bzw. Polyester anschliessend mit Aryl- und/oder Alkylmonoisocyanaten umgesetzt werden.

7. Verfahren nach Anspruch 5, dadurch gekennzeichnet, dass die Ester bzw. Polyester der Formel

I mit Di- und/oder Polyisocyanatoalkyl- und/oder -arylverbindungen in solchen Mengenverhältnissen umgesetzt werden, dass das Zahlenverhältnis der Isocyanatgruppen zu den Hydroxylgruppen 1:1 beträgt.

**Patentansprüche für den Vertraggsstaat: AT**

1. Verfahren zur Herstellung härtbarer Massen aus bei Raumtemperatur flüssigen oder festen, unterhalb 60° C schmelzbaren Urethanen, durch Umsetzung von Isocyanatoalkyl- und/oder -arylverbindungen mit Hydroxy-Endgruppen enthaltenden Estern bzw. Polyestern, dadurch gekennzeichnet, dass die Ester bzw. Polyester der allgemeinen Formel I

$$A{-}(\underset{\underset{O}{\|}}{C}{-}R{-}O{-})_nH \qquad I,$$

worin bedeuten:

R geradkettige Kohlenwasserstoffreste mit 2 bis 10 Kohlenstoffatomen, die ggf. durch bis zu 5 Methyl-, Äthyl- und/oder Propylgruppen substituiert sein können, wobei innerhalb eines (Poly) Estermoleküls der Formel I alle Reste R gleich sein oder aber die Reste R verschieden sein können,

A ein äthylenisch ungesättigter Rest der allgemeinen Formeln II–V:

$$(CH_2{=}\underset{\underset{R^1}{|}}{C}{-}\underset{\underset{O}{\|}}{C}{-}Y{-})_pR^2{-}X{-} \qquad II,$$

$$CH_2{=}\underset{\underset{R^1}{|}}{C}{-}O{-} \qquad III,$$

$$CH_2{=}\underset{\underset{R^1}{|}}{C}{-}CH_2{-}X{-} \qquad IV,$$

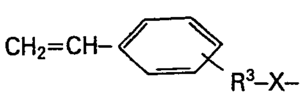 V

mit

$R^1$ H oder $CH_3$,

$R^2$ einen (p+1)-funktionellen geradkettigen oder verzweigten Alkyl- oder einen (p+1)-funktionellen Cycloalkylrest mit jeweils 1 bis 20 Kohlenstoffatomen,

$R^3$ einen Rest der Bedeutung $R^2$ mit p=1,

X O oder $NR^4$,

Y O, NH oder $NR^4$,

$R^4$ $CH_3$ oder $C_2H_5$,

n ganze Zahlen von 1 bis 100 und

p ganze Zahlen von 1 bis 3,

mit Di- und/oder Polyisocyanatoalkyl- und/oder -arylverbindungen in solchen Mengenverhältnissen umgesetzt werden, dass das Zahlenverhältnis der Isocyanatgruppen zu den Hydroxylgruppen zwischen 0,2:1 und 1:1 liegt, und gegebenenfalls anschliessend mit Aryl- und/oder Alkylmonoisocyanaten umgesetzt werden.

2. Verfahren nach Anspruch 1, dadurch gekennzeichnet, dass die nicht mit den Di- und/oder Polyisocyanatoalkyl- und/oder -arylverbindungen abreagierten Hydroxyendgruppen der Ester bzw. Polyester anschliessend mit Aryl- und/oder Alkylmonoisocyanaten umgesetzt werden.

3. Verfahren nach Anspruch 1, dadurch gekennzeichnet, dass die Ester bzw. Polyester der Formel I mit Di- und/oder Polyisocyanatoalkyl- und/oder -arylverbindungen in solchen Mengenverhältnissen umgesetzt werden, dass das Zahlenverhältnis der Isocyanatgruppen zu den Hydroxylgruppen 1:1 beträgt.

**Claims**
**for the contracting states: BE, CH, DE, FR, GB, IT, LI, NL, SE**

1. Hardenable composition comprising urethanes that are liquid at room temperature or are solid at room temperature and can be melted at below 60° C, which have been manufactured by reaching esters or polyesters containing hydroxy terminal groups with difunctional and/or polyfunctional, and optionally subsequently with monofunctional, isocyanatoalkyl and/or isocyanatoaryl compounds, characterised in that the reacted esters or polyesters are those of the general formula I

$$A{-}(\underset{\underset{O}{\|}}{C}{-}R{-}O{-})_nH \qquad I,$$

in which:

R represents straight-chain hydrocarbon radicals having from 2 to 10 carbon atoms, which can optionally be substituted by up to 5 methyl, ethyl and/or propyl groups, it being possible for all the radicals R within a (poly)-ester molecule of the formula I to be the same or alternatively for the radicals R to be different,

A represents an ethylenically unsaturated radical of one of the general formulae II to V:

$$(CH_2{=}\underset{\underset{R^1}{|}}{C}{-}\underset{\underset{O}{\|}}{C}{-}Y{-})_pR^2{-}X{-} \qquad II,$$

$$CH_2{=}\underset{\underset{R^1}{|}}{C}{-}O{-} \qquad III,$$

$$CH_2{=}\underset{\underset{R^1}{|}}{C}{-}CH_2{-}X{-} \qquad IV,$$

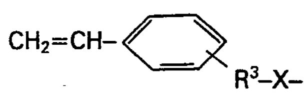 V

in which

$R^1$ represents H or $CH_3$,
$R^2$ represents a (p+1)-functional straight-chain or branched alkyl radical or a (p+1)-functional cycloalkyl radical, each having from 1 to 20 carbon atoms,
$R^3$ represents a radical having the same meaning as $R^2$ with p=1,
X represents O or $NR^4$,
Y represents O or NH or $NR^4$,
$R^4$ represents $CH_3$ or $C_2H_5$,
n represents an integer from 1 to 100, and
p represents an integer from 1 to 3.

2. Compositions according to claim 1, characterised in that the ethylencially unsaturated terminal groups A are those of the formula II.

3. Compositions according to claim 1, characterised in that the ethylenically unsaturated terminal groups A are those of the formula IV.

4. Compositions according to any one of claims 1 to 3, charcterised in that they additionally contain ethylenically unsaturated compounds.

5. Process for the manufacture of compositions according to any one of claims 1 to 3, characterised in that the esters or polyesters of the formula I are reacted with di- and/or poly-isocyanato-alkyl and/or -aryl compounds in such quantity ratios that the numerical ratio of isocyanate groups to hydroxy groups is between 0.2:1 and 1:1.

6. Process according to claim 5, characterised in that the hydroxy terminal groups of the esters or polyesters that have not reacted with the di- and/or poly-isocyanato-alkyl and/or -aryl compounds are subsequently reacted with arylmonoisocyanates and/or alkyl monoisocynates.

7. Process according to claim 5, characterised in that the esters or polyesters of the formula I are reacted with di- and/or poly-isocyanato-alkyl and/or -aryl compounds in such quantity ratios that the numerical ratio of isocyanate groups to hydroxy groups is 1:1.

**Claims for the contracting state: AT**

1. Process for the manufacture of hardenable compositions comprising urethanes that are liquid at room temperature or are solid at room temperature and can be melted at below 60° C, by reacting isocyanato-alkyl and/or isocyanatoaryl compounds with esters or polyesters containing hydroxy terminal groups, characterised in that esters or polyesters of the general formula I

$A-(C-R-O-)_nH$
$\quad \|$
$\quad O$
I,

in which:
R represents straight-chain hydrocarbon radicals having from 2 to 10 carbon atoms, which can optionally be substituted by up to 5 methyl, ethyl and/or propyl groups, it being possible for all the radicals R within a (poly)-ester molecule of the formula I to be the same or alternatively for all the radicals R to be different,
A represents an ethylenically unsaturated radical of one of the general formulae II to V:

$(CH_2=C-C-Y-)_pR^2-X-$
$\quad | \ \|$
$\quad R^1 \ O$
II,

$CH_2=C-O-$
$\quad |$
$\quad R^1$
III,

$CH_2=C-CH_2-X-$
$\quad |$
$\quad R^1$
IV,

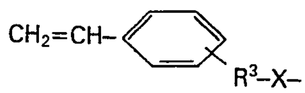
V

in which
$R^1$ represents H or $CH_3$,
$R^2$ represents a (p+1)-functional straight-chain or branched alkyl radical or a (p+1)-functional cycloalkyl radical, each having from 1 to 20 carbon atoms,
$R^3$ represents a radical having the same meaning as $R^2$ with p=1,
X represents O or $NR^4$,
Y represents O or NH or $NR^4$,
$R^4$ represents $CH_3$ or $C_2H_5$,
n represents an integer from 1 to 100, and
p represents an integer from 1 to 3.

are reacted with di- and/or poly-isocyanato-alkyl and/or -aryl compounds in such quantity ratios that the numerical ratio of isocyanate groups to hydroxy groups is between 0.2:1 and 1:1, and optionally subsequently with aryl monoisocyanates and/or alkyl monoisocyanates.

2. Process according to claim 1, characterised in that the hydroxy terminal groups of the esters or polyesters that have not reacted with the di- and/or poly-isocyanato-alkyl and/or -aryl compounds are subsequently reacted with aryl monoisocyanates and/or alkyl monoisocyanates.

3. Process according to claim 1, characterised in that the esters or polyesters of the formula I are reacted with di- and/or poly-isocyanato-alkyl and/or -aryl compounds in such quantity ratios that the numerical ratio of isocyanate groups to hydroxy groups is 1:1.

**Revendications**
**pour les Etats contractants: BE, CH, DE, FR, GB, IT, LI, NL, SE**

1. Matière durcissables constituées d'uréthannes liquides ou solides à la température ambiante mais pouvant fondre au-dessous de 60° C qui ont été préparés par réaction d'esters ou de polyesters renfermant des groupes hydroxy terminaux avec des composés isocyanato-alkyliques et/ou isocyanato-aryliques di- et/ou polyfonctionnels, puis éventuellement avec des isocyanates de ce genre mais monofonctionelles, matières caractérisées en ce que les esters ou polyesters qui ont réagi répondent à la formule générale I

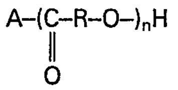
I,

dans laquelle les

R représentent des radicaux hydrocarbonés linéaires qui contiennent chacun de 2 à 10 atomes de carbone et qui peuvent éventuellement porter comme substituants jusqu'à 5 radicaux méthylies, éthyles et/ou propyles, les radicaux R à l'intérieur d'une même molécule d'un (poly)ester de formule I pouvant être tous identiques ou pouvant être différents les uns des autres,

A représente un radical éthylénique répondant à l'une des formules générales II à V:

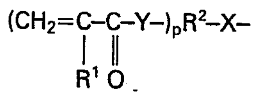
II,

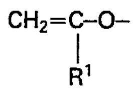
III,

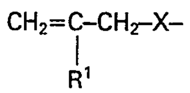
IV,

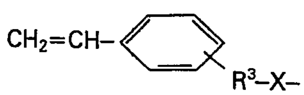
V

dans lesquelles

$R^1$ représente H ou $CH_3$,

$R^2$ représente un radical alkyle, linéaire ou ramifié, de valence égale à (p+1), ou un radical cycloalkyle de valence égale à (p+1), chacun de ces radicaux pouvant contenir de 1 à 20 atomes de carbone,

$R^3$ représente und radical ayant la signification de $R^2$ avec p=1,

X représente O ou $NR^4$,

Y représente O, NH ou $NR^4$,

$R^4$ représente $CH_3$ ou $C_2H_5$,

p représente un nombre entier de 1 à 3.

et

n représente un nombre entier de 1 à 100.

2. Matières selon la revendication 1, caractérisées en ce que les radicaux terminaux éthyléniques A sont des radicaux de formule II.

3. Matières selon la revendication 1, caractérisées en ce que les radicaux terminaux éthyléniques A sont des radicaux de formule IV.

4. Matières selon l'une quelconque des revendications 1 à 3, caractérisées en ce qu'elles contiennent en outre des composés éthyléniques.

5. Procédé de préparation des matières selon l'une quelconque des revendications 1 à 3, procédé caractérisé en ce qu'on fait réagir des esters ou polyesters de formule I avec des composés di- et/ou poly-isocyanato-alkyliques et/ou -aryliques en des quantités relatives telles que le rapport entre le nombre des radicaux isocyanato et le nombre des radicaux hydroxy soit compris entre 0,2:1 et 1:1.

6. Procédé selon la revendication 5, caractérisé en ce qu'on fait ensuite réagir avec des mono-isocyanates d'aryles et/ou d'alkyles les radicaux hydroxy terminaux qui n'ont pas réagi avec les composés di- et/ou poly-isocyanato-alkyliques et/ou -aryliques.

7. Procédé selon la revendication 5, caractérisé en ce qu'on fait réagir les esters ou polyesters de formule I avec des composés di- et/ou poly-isocyanato-alkyliques et/ou aryliques en des quantités relatives telles que le rapport entre le nombre des radicaux isocyanato et le nombre des radicaux hydroxy soit égal à 1:1.

**Revendications pour l'Etat contractant: AT**

1. Procédé de préparation de matières durcissables constituées d'uréthannes liquides ou solides à la température ambiante et pouvant fondre au-dessous de 60° C, par réaction de composés isocyanato-alkyliques et/ou isocyanato-aryliques avec des esters ou polyesters contenant des radicaux hydroxy terminaux, procédé caractérisé en ce qu'on fait réagir des esters ou polyesters répondant à la formule générale I

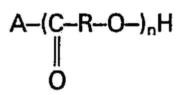
I,

dans laquelle les

R représentent des radicaux hydrocarbonés linéaires qui contiennent chacun de 2 à 10 atomes de carbone et qui peuvent éventuellement porter comme substituants jusqu'à 5 radicaux méthyles, éthyles, et/ou propyles, les radicaux R à l'intérieur d'une même molécule d'un (poly)ester de formule I pouvant être tous indentiques ou pouvant être différents les uns des autres,

A représente un radical éthylénique répondant à l'une des formules générales II à V:

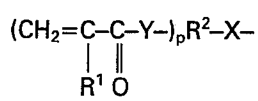
II,

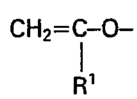
III,

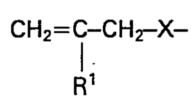
IV,

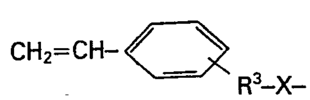
V

dans lesquelles

$R^1$ représente H oo $CH_3$,
$R^2$ représente un radical alkyle, linéaire ou ramifié, de valence égale à (p+1), ou un radical cycloalkyle de valence égale à (p+1), chacun de ces radicaux pouvant contenir de 1 à 20 atomes de carbone,
$R^3$ représente und radical ayant la signification de $R^2$ avec p=1,
X représente O ou $NR^4$,
Y représente O, NH ou $NR^4$,
$R^4$ représente $CH_3$ ou $C_2H_5$,
p représente un nombre entier de 1 à 3.
et
n représente un nombre entier de 1 à 100,

avec des composés di- et/ou poly-isocyanato-alkyliques et/ou -aryliques en des quantités relatives telles que le rapport entre le nombre des radicaux isocyanato et le nombre des radicaux hydroxy soit compris entre 0,2:1 et 1:1, puis, éventuellement, on fait réagir avec des mono-isocyanates d'aryles et/ou d'alkyles.

2. Procédé selon la revendication 1, caractérisé en ce qu'on fait ensuite réagir avec des mono-isocyanates d'aryles et/ou d'alkyles les radicaux hydroxy terminaux des esters ou polyesters qui n'ont pas réagi avec les composés di- et/ou poly-isocyanato-alkyliques et/ou -aryliques.

3. Procédé selon la revendication 1, caractérisé en ce qu'on fait réagir les esters ou polyesters de formule I avec les composés di- et/ou poly-isocyanato-alkyliques et/ou -aryliques en des quantités relatives telles que le rapport entre le nombre des radicaux isocyanato et le nombre des radicaux hydroxy soit égal à 1:1.